# EUROPEAN PATENT APPLICATION

(11) **EP 4 683 413 A1**
(43) Date of publication of application: **21.01.2026**
(21) Application number: 23926814.7
(22) Date of filing: 16.03.2023
(51) Int. Cl.: H04W 72/0457

(54) **WIRELESS COMMUNICATION METHODS, ACCESS POINT DEVICES AND SITE DEVICES**

(71) Applicant: GUANGDONG OPPO MOBILE TELECOMMUNICATIONS CORP., LTD., Dongguan, Guangdong 523860 (CN)
(72) Inventor: LI, Yapu, Dongguan, Guangdong 523860 (CN); GAO, Ning, Dongguan, Guangdong 523860 (CN); LUO, Chaoming, Dongguan, Guangdong 523860 (CN)
(74) Representative: Mewburn Ellis LLP
(86) International application number: PCT/CN2023/081937
(87) International publication number: WO 2024/187461

(57) **Abstract**

Wireless communication methods, access point devices, and station devices. A method comprises: an access point device sends first indication information to a plurality of station devices, the first indication information being used for indicating whether to start a multi-user multiple-input and multiple-output (MU-MIMO) operating mode based on the operating bandwidth of the plurality of station devices. Under the condition that the MU-MIMO operating mode based on the operating bandwidth of the plurality of station devices is started, the bandwidth of uplink transmission and/or downlink transmission by each station device among the plurality of station devices is the operating bandwidth of the station device.

## Description

### TECHNICAL FIELD

Embodiments of the present disclosure relate to the field of communication, and in particular, to a wireless communication method, an access point device, and a station device.

### BACKGROUND

In a basic service set (BSS) network, there are a plurality of station devices with different operating bandwidths, and an operating bandwidth of a station device is smaller than or equal to an operating bandwidth of an access point device. When uplink or downlink multi-user transmission is performed, a station device with a relatively large operating bandwidth will waste a part of the bandwidth, resulting in reduced spectrum efficiency.

### SUMMARY

The present disclosure provides a wireless communication method, an access point device and a station device, which are conducive to improving spectrum efficiency.

In a first aspect, a wireless communication method is provided, including: transmitting, by an access point device, first indication information to a plurality of station devices, the first indication information being used to indicate whether to enable a multi-user multiple-input multiple-output (MU-MIMO) operating mode based on operating bandwidths of the plurality of station devices, where in a case where the MU-MIMO operating mode based on the operating bandwidths of the plurality of station devices is enabled, a bandwidth for uplink transmission and/or downlink transmission of each station device in the plurality of station devices is an operating bandwidth of the station device.

In a second aspect, a wireless communication method is provided, including: receiving, by a station device, first indication information transmitted by an access point device, the first indication information being used to indicate whether to enable a multi-user multiple-input multiple-output (MU-MIMO) operating mode based on operating bandwidths of a plurality of station devices, wherein in a case where the MU-MIMO operating mode based on the operating bandwidths of the plurality of station devices is enabled, a bandwidth for uplink transmission and/or downlink transmission of each station device in the plurality of station devices is an operating bandwidth of the station device.

In a third aspect, an access point device is provided, and is configured to perform the method in the first aspect or various implementations thereof.

Specifically, the access point device includes a function module configured to perform the method in the first aspect or various implementations thereof.

In a fourth aspect, a station device is provided, and is configured to perform the method in the second aspect or various implementations thereof.

Specifically, the station device includes a function module configured to perform the method in the second aspect or various implementations thereof.

In a fifth aspect, an access point device is provided, including a processor and a memory. The memory is used to store a computer program, and the processor is used to call the computer program stored in the memory and run the computer program to perform the method in the first aspect or various implementations thereof.

In a sixth aspect, a station device is provided, including a processor and a memory. The memory is used to store a computer program, and the processor is used to call the computer program stored in the memory and run the computer program to perform the method in the second aspect or various implementations thereof.

In a seventh aspect, a chip is provided for implementing the method in any of the first aspect and the second aspect or various implementations thereof.

Specifically, the chip includes: a processor for calling a computer program from a memory and running the computer program, so that a device equipped with the chip performs the method as described in any of the first aspect and the second aspect or various implementations thereof.

In an eighth aspect, a computer-readable storage medium is provided for storing a computer program, where the computer program enables a computer to perform the method in any of the first aspect and the second aspect or various implementations thereof.

In a ninth aspect, a computer program product is provided, including computer program instructions. The computer program instructions enable a computer to perform the method in any of the first aspect and the second aspect or various implementations thereof.

In a tenth aspect, a computer program is provided. When run on a computer, the computer program enables the computer to perform the method in any of the first aspect and the second aspect or various implementations thereof.

Through the above technical solutions, the access point device may indicate to enable the MU-MIMO operating mode based on the operating bandwidths of the plurality of station devices via the first indication information. In a case where the operating mode is enabled, the bandwidth for uplink transmission and/or downlink transmission of the station device is the operating bandwidth of the station device, thereby improving the spectrum efficiency.

### BRIEF DESCRIPTION OF THE DRAWINGS

FIG. 1 is a schematic diagram of a communication system architecture provided in embodiments of the present disclosure.
FIG. 2 is a schematic interactive diagram of a trigger based (TB) sounding process.
FIG. 3 is a schematic interaction diagram of an uplink (UL) sounding process.
FIG. 4 is a format of a trigger frame.
FIG. 5 is a schematic diagram of a format of an ultra-high reliability multi-user physical layer protocol data unit (UHR MU PPDU).
FIG. 6 is a schematic diagram of a format of an ultra-high reliability trigger based physical layer protocol data unit (UHR TB PPDU).
FIG. 7 is a schematic interaction diagram of a wireless communication method 200 provided in embodiments of the present disclosure.
FIG. 8 is a schematic format diagram of an indication of enabling an unequal bandwidth multi-user multiple-input multiple-output (MU-MIMO) operating mode through a Common Info field provided in embodiments of the present disclosure.
FIG. 9 is a schematic interaction diagram of an access point device indicating whether to enable an unequal bandwidth MU-MIMO operating mode in a TB sounding phase provided in embodiments of the present disclosure.
FIG. 10 is a schematic interaction diagram of an access point device indicating whether to enable an unequal bandwidth MU-MIMO operating mode in a transmission opportunity (TXOP) phase provided in embodiments of the present disclosure.
FIG. 11 is a schematic interaction diagram of an access point device indicating whether to enable an unequal bandwidth MU-MIMO operating mode in a TB PPDU transmission phase provided in embodiments of the present disclosure.
FIG. 12 is a schematic interaction diagram of an access point device indicating whether to enable an unequal bandwidth MU-MIMO operating mode in a downlink MU PPDU transmission phase provided in embodiments of the present disclosure.
FIG. 13 is a schematic diagram of an unequal bandwidth MU-MIMO transmission provided in embodiments of the present disclosure.
FIG. 14 is a schematic format diagram of carrying second indication information through a reserved field of a Special User Info field provided in embodiments of the present disclosure.
FIG. 15 is a schematic format diagram of carrying second indication information through a User Info field provided in embodiments of the present disclosure.
FIG. 16 is a schematic diagram of another unequal bandwidth MU-MIMO transmission provided in embodiments of the present disclosure.
FIG. 17 is a schematic block diagram of an access point device provided in embodiments of the present disclosure.
FIG. 18 is a schematic block diagram of a station device provided in embodiments of the present disclosure.
FIG. 19 is a schematic block diagram of a communication device provided in embodiments of the present disclosure.
FIG. 20 is a schematic block diagram of a chip provided in embodiments of the present disclosure.
FIG. 21 is a schematic block diagram of a communication system provided in embodiments of the present disclosure.

### DETTAILED DESCRIPTION

Technical solutions in embodiments of the present disclosure will be described below in conjunction with drawings in the embodiments of the present disclosure. Apparently, the described embodiments are some but not all embodiments of the present disclosure. With respect to the embodiments of the present disclosure, all other embodiments obtained by the ordinary skilled in the art without paying creative efforts belong to the protection scope of the present disclosure.

The technical solutions of the embodiments of the present disclosure may be applied to various communication systems, such as Wireless Local Area Networks (WLAN), Wireless Fidelity (WiFi) or other communication systems.

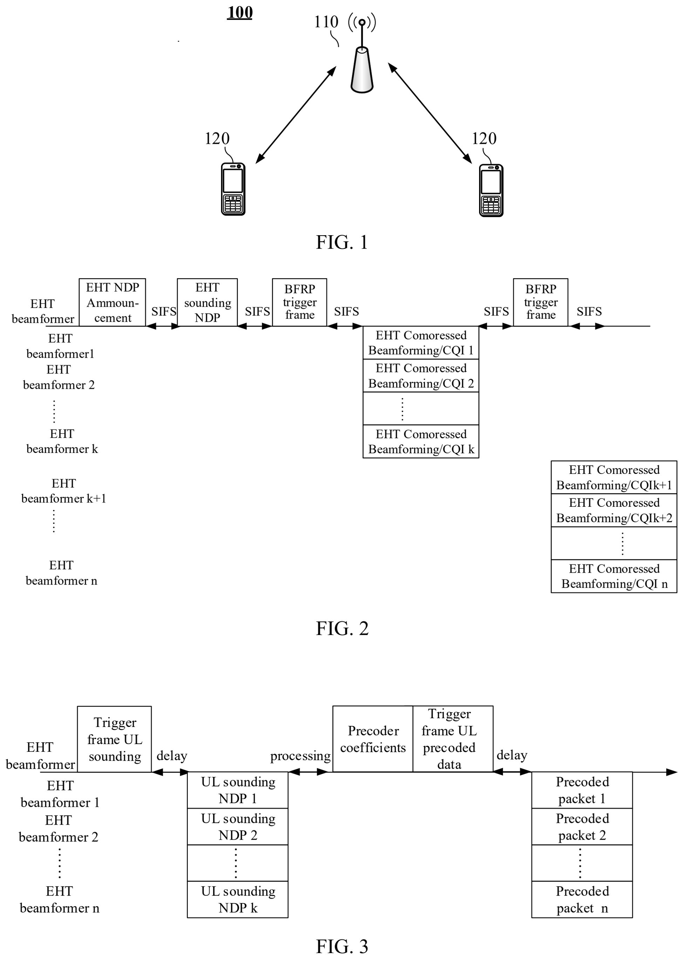

For example, a communication system 100 applied in the embodiments of the present disclosure is shown in FIG. 1. The communication system 100 may include an access point (AP) 110 and stations (STAs) 120 accessing a network via the access point 110.

In some scenarios, the AP is also referred to as an AP STA, that is, in a sense, the AP is also a STA.

In some scenarios, the STA is also referred to as a non-AP STA.

The communication in the communication system 100 may be communication between an AP and a non-AP STA, communication between a non-AP STA and a non-AP STA, or communication between a STA and a peer STA, where a peer STA may refer to a device that communicates with the STA in a peer-to-peer manner, for example, the peer STA may be an AP or a non-AP STA.

The AP is equivalent to a bridge for connecting a wired network and a wireless network, which has a main function of connecting various wireless network clients together and then connecting the wireless network to Ethernet. An AP device may be a terminal device (e.g., a mobile phone) with a WiFi chip or a network device (e.g., a router).

It should be understood that a role of a STA in the communication system is not absolute. For example, in some scenarios, the mobile phone is a non-AP STA in a case where the mobile phone is connected to a router, and the mobile phone plays a role of an AP in a case where the mobile phone serves as a hotspot for other mobile phones.

The AP and the non-AP STA may be devices applied in the Internet of Vehicles, Internet of Things (IoT) nodes and sensors in the IoT, smart cameras, smart remote controls, smart water meter and electricity meter in smart homes, and sensors in smart cities.

In some embodiments, the non-AP STA may support 802.11be standard. The non-AP STA may also support various current and future 802.11 family wireless local area networks (WLAN) standards such as 802.11ax, 802.11ac, 802.11n, 802.11g, 802.11b and 802.11a.

In some embodiments, the AP may be a device supporting 802.11be standard. The AP may also be a device that supports various current and future 802.11 family WLAN standards such as 802.11ax, 802.11ac, 802.11n, 802.11g, 802.11b and 802.11a.

In the embodiments of the present disclosure, the STA may be, supporting WLAN or WiFi technology, a mobile phone, a tablet computer, a computer, a virtual reality (VR) device, an augmented reality (AR) device, a wireless device in industrial control, a set-top box, a wireless device in self-driving, a vehicle communication device, a wireless device in remote medical, a wireless device in smart grid, a wireless device in transportation safety, a wireless device in smart city or a wireless device in smart home, a wireless communication chip/ASIC/SOC/etc.

The frequency bands that can be supported by the WLAN technology may include but are not limited to: low frequency bands (e.g., 2.4 GHz, 5 GHz and 6 GHz) and high frequency bands (e.g., 60 GHz).

FIG. 1 exemplarily shows an AP STA and two non-AP STAs. Optionally, the communication system 100 may include a plurality of AP STAs and other numbers of non-AP STAs, which is not limited in the embodiments of the present disclosure.

It should be understood that a device having a communication function in a network/system in the embodiments of the present disclosure may be referred to as a communication device. Taking the communication system 100 shown in FIG. 1 as an example, the communication device may include an access point 110 and stations 120 with communication functions. The access point 110 and the stations 120 may be specific devices as described above, and details are not repeated here. The communication device may further include other devices in the communication system 100, such as network controllers, gateways and other network entities, which are not limited in the embodiments of the present disclosure.

It should be understood that the terms "system" and "network" are often used interchangeably herein. The term "and/or" herein is only an association relationship to describe associated objects, and means that there may be three kinds of relationships. For example, A and/or B may mean three cases where: A exists alone, both A and B exist, and B exists alone. In addition, a character "/" herein generally means that associated objects before and after "/" are in an "or" relationship.

It should be understood that the "indication" mentioned in the embodiments of the present disclosure may be a direct indication, an indirect indication, or represent an association relationship. For example, A indicates B, which may mean that A directly indicates B, for example, B may be acquired by A, or that A indirectly indicates B, for example, A indicates C, and B may be acquired by C; or that there is an association relationship between A and B.

In the description of the embodiments of the present disclosure, the term "correspondence" means that there is a relationship of direct correspondence or indirect correspondence between two, or mean that there is an associated relationship between the two, or mean a relationship of indicating and being indicated or a relationship of configuring and being configured.

In the embodiments of the present disclosure, the term "predefined" may be implemented by pre-saving corresponding codes, tables or other manners that may be used to indicate related information in devices (e.g., including an access point and a station), and the specific implementations are not limited in the present disclosure. For example, the predefinition may refer to what is defined in a protocol.

To facilitate understanding of the technical solutions of the embodiments of the present disclosure, the relevant terms of the present disclosure are explained below.

Association identifier (AID) is used to identify a terminal having established an association with an access point.

Media access control (MAC), which is an abbreviation of a media access control address.

Transmission opportunity (TXOP) refers to a period of time in which a terminal with the transmission opportunity may actively initiate one or more transmissions.

A trigger based (TB) sounding process and an UL sounding process related to the present disclosure are described below.

### 1. TB sounding process

FIG. 2 shows a TB sounding process. Here, an extremely high throughput (EHT) beamformer (e.g., AP) transmits an EHT null data physical layer protocol data unit (NDP) announcement including two or more station information fields (STA Info fields). The EHT sounding NDP is transmitted after a short interframe space (SIFS). A beamforming report poll (BFRP) trigger frame is transmitted after the SIFS. Each beamformee (e.g., STA) triggered by the BFRP trigger frame shall respond to an extremely high throughput trigger based physical layer protocol data unit (EHT TB PPDU) after the SIFS. The PPDU includes one or more EHT compressed beamforming or channel quality indication (CQI) frames.

TB sounding may request single-user (SU) feedback, multiple-user (MU) feedback, or CQI feedback.

In the EHT TB sounding process, the beamformer (e.g., AP) indicates a tone (subcarrier) grouping Ng, a codebook size, and the number of columns Nc that request feedback from SU or MU in the STA Info field in the EHT NDP Announcement; and sets Partial BW Info field in the STA Info field to indicate a feedback tone index of the requested EHT Compressed Beamforming/CQI Report.

### 2. UL sounding process

FIG. 3 shows a collaborative uplink multiple-input multiple-output (MIMO) process, that is, an uplink sounding process. As shown in FIG. 3, the following steps may be included:
(1) a beamformer (e.g., AP) transmits a trigger frame to each beamformee (i.e., STA);
(2) a STA transmits a sounding NDP to an AP, and the AP calculates a block diagonal precoding matrix, where the diagonal precoding matrix processes centrally all the STAs, but may be implemented by STAs at different locations;
(3) the AP provides a relevant part of the precoding matrix to each STA in the trigger frame; and
(4) the STAs use their respective parts of the precoding matrix to perform transmitting precoding.

The trigger frame related to the present disclosure is described below.

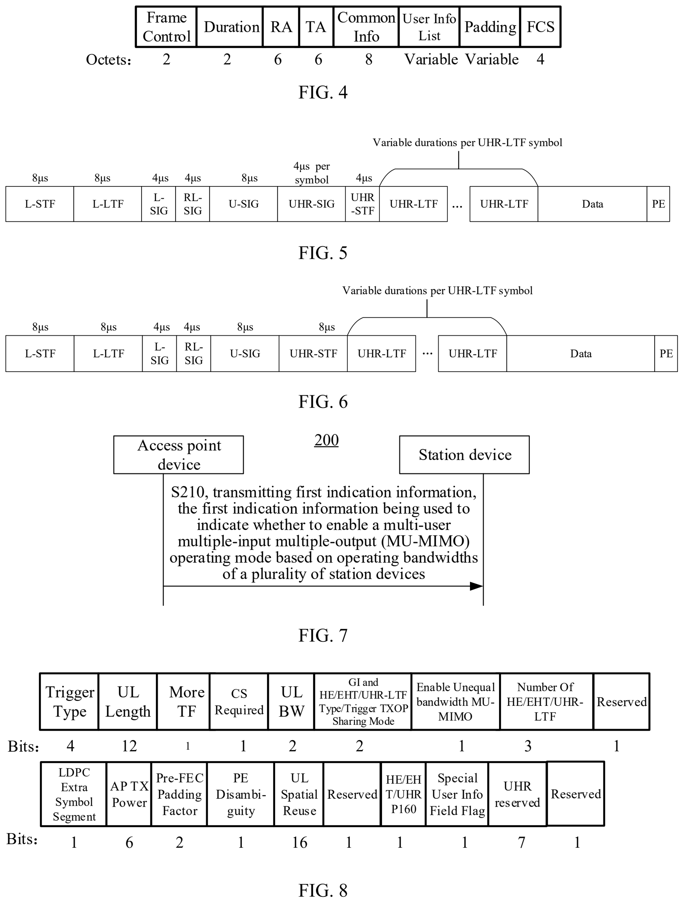

In uplink transmission, the AP generally requests one or more STAs to transmit TB PPDUs through a trigger frame. Specifically, the trigger frame allocates resources for one or more TB PPDU transmissions and also carries other information required for the responding STA to transmit a high efficiency (HE) TB PPDU. FIG. 4 shows a format of a trigger frame, in which the trigger frame mainly includes a common information field (Common Info field) and a user information list field (User Info List field). Here, the User Info List field includes zero or more user information fields (User Info fields).

There are many types of trigger frames, and the type is generally indicated in a Trigger Type Subfield in the Common Info field, as shown in Table 1.

**Table 1**

| Value of Trigger Type Subfield | Trigger frame variant |
|---|---|
| 0 | Basic |
| 1 | BFRP |
| 2 | MU-BAR |
| 3 | Multiple-User Request To Send (MU-RTS) |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8-15 | Reserved |

The Ultra-High Reliability (UHR) PPDU related to the present disclosure is described below.

FIG. 5 shows a schematic diagram of a format of a UHR MU PPDU, where the UHR MU PPDU is used to be transmitted to one or more users. Here, a Non-HT Long Training field (Non-HT Short Training field, L-STF) is mainly used for signal sounding, automatic gain control, time synchronization and coarse frequency offset estimation; a Non-HT Long Training field (L-LTF) is mainly used for channel estimation and fine frequency offset estimation; a Non-HT SIGNAL field (L-SIG) is used to transmit information of rate and length; a Repeated Non-HT SIGNAL field (Repeated L-SIG, RL-SIG) is a repetition of the L-SIG; a Universal SIGNAL field (U-SIG) and a UHR SIGNAL field (UHR-SIG) are used to carry information for decoding the PPDU; a UHR Short Training field (UHR-STF) is used to improve automatic gain control estimation in MIMO transmission; a UHR Long Training field (UHR-LTF) is used for MIMO channel estimation from a constellation mapping output to a receiving link; a data field is used to transmit information; and a Packet Extension (PE) field is an extension of the packet. In the UHR MU PPDU, the L-STF, the L-LTF, the L-SIG, the RL-SIG, the U-SIG and the UHR-SIG are referred to as pre-UHR modulation fields; and the UHR-STF, the UHR-LTF, the data field and the PE field are referred to as UHR modulation fields.

For a UHR MU PPDU, each UHR-LTF symbol has the same guard interval (GI) duration as a data symbol, which is 0.8 µs, 1.6 µs or 3.2 µs. The UHR-LTF field includes three types: 1x EHT-LTF, 2x EHT-LTF and 4x EHT-LTF. Each 1x EHT-LTF, 2x EHT-LTF and 4x EHT-LTF symbol without GI has a respective duration of 3.2 µs, 6.4 µs and 12.8 µs. Each data symbol without GI is 12.8 µs. A duration of the PE field in the UHR PPDU is 0 µs, 4 µs, 8 µs, 12 µs, 16 µs or 20 µs.

FIG. 6 shows a schematic diagram of a format of a UHR TB PPDU, which is used to transmit a response trigger frame of an AP, the response trigger frame being used to trigger a response of a STA. In the UHR TB PPDU, the L-STF, the L-LTF, the L-SIG and the U-SIG are referred to as pre-UHR modulation fields; and the UHR-STF, the UHR-LTF, the data field and the PE field are referred to as UHR modulation fields. A duration of the UHR-STF field in the UHR TB PPDU is twice a duration of the UHR-STF field in the UHR MU PPDU.

In a basic service set (BSS) network, there are a plurality of non-AP STAs with different operating bandwidths, and an operating bandwidth of the non-AP STA is smaller than or equal to an operating bandwidth of the AP. When uplink or downlink multi-user transmission is performed, a non-AP STA with a relatively large operating bandwidth will waste a part of the bandwidth, resulting in reduced spectrum efficiency. For example, the operating bandwidth of the AP is 160 MHz, and the operating bandwidths of a non-AP STA 1 and a non-AP STA 2 are 80 MHz and 160 MHz, respectively. When downlink (DL) multi-user (MU) transmission is performed, there are usually two modes:
1. Orthogonal frequency division multiple access (OFDMA) mode, that is, the AP transmits a 160 MHz MU physical layer protocol data unit (PPDU), where a 996-tone RU 1 (a lower 80 MHz subblock) is allocated to the non-AP STA 1, and a 996-tone RU 2 (a higher 80 MHz subblock) is allocated to the non-AP STA 2. In this case, the non-AP STA 2 wastes 80 MHz bandwidth.
2. MU-MIMO mode, that is, the AP transmits an 80 MHz MU PPDU, where data of the non-AP STA 1 and the non-AP STA 2 are both in a 80 MHz frequency domain and distinguished by spatial streams. In this case, the non-AP STA 2 wastes 80 MHz bandwidth.

Therefore, how to perform uplink transmission and/or downlink transmission to improve spectrum efficiency is an issue that needs to be solved urgently.

The embodiments of the present disclosure provide a technical solution, whereby an access point device may enable station devices to operate on their respective operating bandwidths, thereby improving the spectrum efficiency.

To facilitate understanding of the technical solution of the embodiments of the present disclosure, the technical solution of the present disclosure are described in detail below through specific embodiments. The following related technologies may be, as optional solutions, arbitrarily combined with the technical solution of the embodiments of the present disclosure, and they all belong to the protection scope of the embodiments of the present disclosure. The embodiments of the present disclosure include at least part of the following contents.

FIG. 7 is a schematic interaction diagram of a wireless communication method 200 provided in embodiments of the present disclosure. As shown in FIG. 7, the method 200 includes the following contents.

In S210, an access point device transmits first indication information to a plurality of station devices, where the first indication information is used to indicate whether to turn on (or enable) a multi-user multiple-input multiple-output (MU-MIMO) operating mode based on operating bandwidths of the plurality of station devices, or in other words, the first indication information is used to indicate uplink transmission and/or downlink transmission according to the operating bandwidths of the plurality of station devices.

In some embodiments, in a case where the MU-MIMO operating mode based on the operating bandwidths of the plurality of station devices is turned on (or enabled), the bandwidth for uplink transmission and/or downlink transmission of each station device in the plurality of station devices is the operating bandwidth of the station device. The uplink transmission here may include PPDU transmission or frame transmission from the station device to the access point device, and the downlink transmission may include PPDU transmission or frame transmission from the access point device to the station device. Therefore, in the embodiments of the present disclosure, the access point device enables the station devices to operate in their respective operating bandwidths by turning on the MU-MIMO operating mode based on the operating bandwidths of the station devices, thereby improving the spectrum efficiency.

In the embodiments of the present disclosure, the MU-MIMO operating mode based on the operating bandwidths of the plurality of station devices is also referred to as an unequal bandwidth MU-MIMO operating mode. That is, in a case where the MU-MIMO operating mode based on the operating bandwidths of the plurality of station devices is enabled, the access point device and the station device may perform an unequal downlink bandwidth MU-MIMO transmission and/or an unequal uplink bandwidth MU-MIMO transmission.

It should be noted that in the embodiments of the present disclosure, a precoding matrix used for downlink transmission may be determined based on a sounding result obtained in TB sounding process, and a precoding matrix used for uplink transmission may be determined based on a sounding result obtained in the TB sounding process. For example, the precoding matrix is determined by using the channel reciprocity, alternatively, the precoding matrix may be determined by using the sounding result obtained in the UL sounding process. For example, the access point device estimates an uplink channel from each station device to the access point device based on a NDP transmitted by each station device, and the access point device centrally processes precoding matrices (e.g., spatial mapping matrices) of all station devices and then provides the relevant part of the precoding matrix to each station device.

In some embodiments of the present disclosure, the method 200 further includes:
the station device transmitting first capability information to the access point device, where the first capability information is used to indicate whether the station device supports an unequal bandwidth MU-MIMO operating mode.

For example, the first capability information is carried in a UHR physical layer capabilities information field (UHR PHY Capabilities Information field).

Optionally, a reserved field in the UHR PHY Capabilities Information field may be used to carry the first capability information, alternatively, a new field may be added in the UHR PHY Capabilities Information field to carry the first capability information.

For example, the UHR PHY Capabilities Information field may include a first field for indicating whether the station device supports the unequal bandwidth MU-MIMO operating mode.

Optionally, the first field may be 1 bit, and different values of the 1 bit are used to indicate whether the station device supports the Unequal bandwidth MU-MIMO operating mode. For example, a value of 0 indicates support, and a value of 1 indicates non-support. As another example, a value of 1 indicates support, and a value of 0 indicates non-support.

In some embodiments, the first indication information is carried in a media access control (MAC) frame.

In some embodiments, the first indication information is carried in an existing field in the MAC frame. For example, a reserved field in the MAC frame is used to carry the first indication information, alternatively, a new field may be added to the MAC frame to carry the first indication information.

Optionally, the first indication information may be 1 bit, and different values of the 1 bit are used to indicate whether to turn on (or enable) the unequal bandwidth MU-MIMO operating mode. For example, a value of 0 indicates that the unequal bandwidth MU-MIMO operating mode is enabled, and a value 1 indicates that the unequal bandwidth MU-MIMO operating mode is not enabled. As another example, a value of 1 indicates that the unequal bandwidth MU-MIMO operating mode is enabled, and a value of 0 indicates that the unequal bandwidth MU-MIMO operating mode is not enabled.

In some embodiments, the first indication information is carried in a common information field (Common Info field) in the MAC frame.

For example, as shown in FIG. 8, the Common Info field includes an enable unequal bandwidth MU-MIMO field, which is used to indicate whether to turn on (or enable) the unequal bandwidth MU-MIMO operating mode, that is, used to carry the first indication information.

It should be understood that naming, field length and field position of the enable unequal bandwidth MU-MIMO field in FIG. 8 are only examples, and the first indication information may also be carried in other fields of the MAC frame, which is not limited in the present disclosure.

Embodiment 1: the first indication information is transmitted in a TB Sounding phase.

In this case, the first indication information may be applicable to all MIMO transmissions using the current sounding result.

That is, all the MIMO transmissions using the current sounding result enable or disable the unequal bandwidth MU-MIMO operating mode according to an indication of the first indication information.

In some embodiments, the first indication information may be carried in a frame transmitted by an access point device to a station device in the TB Sounding phase. For example, the first indication information is carried in a BFRP trigger frame.

In some embodiments, the first indication information is carried in an existing field in the BFRP trigger frame. For example, a reserved field in the BFRP trigger frame is used to carry the first indication information, alternatively, a new field may be added to the BFRP trigger frame to carry the first indication information.

In some embodiments, the first indication information is carried in a common information field (Common Info field) in the BFRP trigger frame. For example, the Common Info field includes an enable unequal bandwidth MU-MIMO field, which is used to indicate whether to turn on (or enable) the unequal bandwidth MU-MIMO operating mode, that is, used to carry the first indication information.

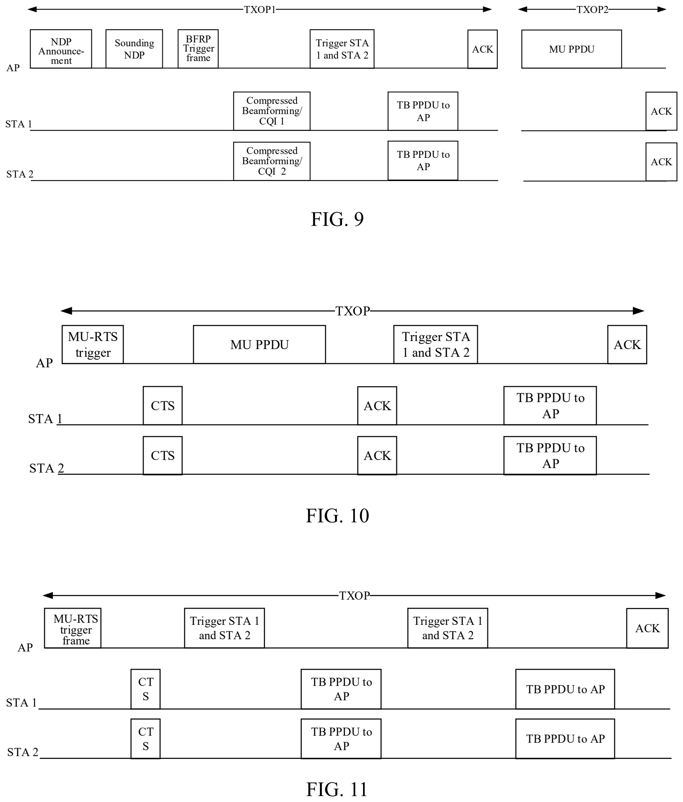

FIG. 9 shows a schematic interaction diagram of an AP indicating whether to enable an unequal bandwidth MU-MIMO operating mode in a TB Sounding phase. As shown in FIG. 9, the AP may instruct a STA 1 and a STA 2 to enable the unequal bandwidth MU-MIMO operating mode in the BFRP trigger frame in the TB Sounding phase in TXOP1. Then, in the subsequent TB PPDU transmission and the MU PPDU transmission performed by TXOP2 using the sounding result, the unequal bandwidth MU-MIMO operating mode is enabled.

Embodiment 2: the first indication information is transmitted in an initial phase of TXOP.

In this case, the first indication information may be applicable to all frame interactions in the TXOP phase.

That is, all PPDU transmissions in the TXOP phase (including the MU PPDU transmission and the TB PPDU transmission) enable or disable the unequal bandwidth MU-MIMO operating mode according to an indication of the first indication information.

In some embodiments, the first indication information may be carried in a frame transmitted by an access point device to a station device in the TXOP phase.

For example, the first indication information is carried in a multi-user request to send (MU-RTS) trigger frame, and the MU-RTS trigger frame is used to initiate a TXOP.

In some embodiments, the first indication information is carried in an existing field in the MU-RTS trigger frame. For example, a reserved field in the MU-RTS trigger frame is used to carry the first indication information, alternatively, a new field may be added to the MU-RTS trigger frame to carry the first indication information.

In some embodiments, the first indication information is carried in a common information field (Common Info field) in the MU-RTS trigger frame. For example, the Common Info field includes an enable unequal bandwidth MU-MIMO field, which is used to indicate whether to turn on (or enable) the unequal bandwidth MU-MIMO operating mode, that is, used to carry the first indication information.

FIG. 10 shows a schematic interaction diagram of an AP indicating whether to enable an unequal bandwidth MU-MIMO operating mode in a TXOP phase. As shown in FIG. 10, the AP may indicate a STA 1 and a STA 2 to enable the unequal bandwidth MU-MIMO operating mode in the MU-RTS trigger frame in the TXOP phase. Then, the unequal bandwidth MU-MIMO operating mode is enabled for both MU PPDU transmission and TB PPDU transmission in the entire TXOP.

Embodiment 3: the first indication information is transmitted in a TB PPDU transmission phase.

In this case, the first indication information may be applicable to TB PPDU transmission in the TB PPDU transmission phase.

In some embodiments, the first indication information may be carried in a frame transmitted by an access point device to a station device in the TB PPDU transmission phase. For example, the first indication information is carried in a basic trigger frame, and the first indication information is applicable to TB PPDU transmission triggered by the basic trigger frame.

In some embodiments, the first indication information is carried in an existing field in the basic trigger frame. For example, a reserved field in the basic trigger frame is used to carry the first indication information, alternatively, a new field may be added to the basic trigger frame to carry the first indication information.

In some embodiments, the first indication information is carried in a common information field (Common Info field) in a basic trigger frame. For example, the Common Info field includes an enable unequal bandwidth MU-MIMO field, which is used to indicate whether to turn on (or enable) the unequal bandwidth MU-MIMO operating mode, that is, used to carry the first indication information.

FIG. 11 shows a schematic interaction diagram of an AP indicating whether to enable an unequal bandwidth MU-MIMO operating mode in a TB PPDU transmission phase. As shown in FIG. 11, the AP may indicate a STA 1 and a STA 2 not to enable the unequal bandwidth MU-MIMO operating mode in the first basic trigger frame within a TXOP, and the unequal bandwidth MU-MIMO operating mode is not enabled in the subsequent TB PPDU transmission. In the second basic trigger frame, the AP may indicate the STA 1 and the STA 2 to enable the unequal bandwidth MU-MIMO operating mode, and the unequal bandwidth MU-MIMO operating mode is enabled in the subsequent TB PPDU transmission.

In some embodiments of the present disclosure, the first indication information is carried in a PPDU. For example, the first indication information is carried in a preamble part of the PPDU.

In some embodiments, the first indication information is carried in an existing field (e.g., a U-SIG field) in the preamble part of the PPDU. For example, a PPDU type and compression mode field of the U-SIG field is used to carry the first indication information. For example, a reserved value (e.g., 3) of the PPDU type and compression mode field is used to indicate activation of an unequal bandwidth MU-MIMO operating mode.

In some specific embodiments, the first indication information is carried in an MU PPDU for transmission.

In some specific embodiments, the first indication information is carried in a universal signal (U-SIG) field in the MU PPDU.

In some other embodiments, a new field may be added in the PPDU to carry the first indication information.

Embodiment 4: the first indication information is transmitted in a downlink MU PPDU transmission phase.

In this case, the first indication information may be applicable to MU PPDU transmission in the downlink MU PPDU transmission phase.

In some embodiments, the first indication information may be carried in a frame transmitted by an access point device to a station device in the downlink MU PPDU transmission phase. For example, the first indication information is carried in the MU PPDU.

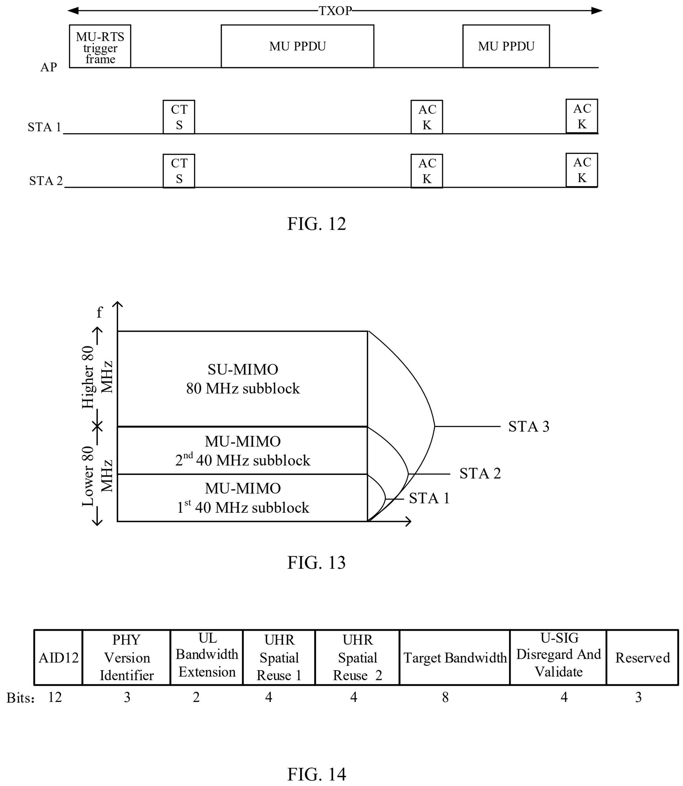

FIG. 12 shows a schematic interaction diagram of an AP indicating whether to enable an unequal bandwidth MU-MIMO operating mode in a downlink MU PPDU transmission phase. As shown in FIG. 12, the AP may indicate to enable the unequal bandwidth MU-MIMO operating mode in the first MU PPDU within a TXOP, and indicate a STA 1 and a STA 2 not to enable the unequal bandwidth MU-MIMO operating mode in the second MU PPDU.

Embodiment 5: the first indication information is transmitted in an UL sounding phase.

In this case, the first indication information may be applicable to all MIMO transmissions using the current sounding result.

That is, all the MIMO transmissions using the current sounding result enable or disable the unequal bandwidth MU-MIMO operating mode according to an indication of the first indication information.

In some embodiments, the first indication information may be carried in a frame transmitted by an access point device to a station device in the UL Sounding phase. For example, the first indication information is carried in a trigger frame, and the trigger frame is used to trigger a plurality of station devices to transmit sounding NDP frames.

In some embodiments, the first indication information is carried in an existing field in the trigger frame. For example, a reserved field in the trigger frame is used to carry the first indication information, alternatively, a new field may be added to the trigger frame to carry the first indication information.

It should be understood that Embodiments 1 to 5 as described above may be implemented separately or in combination, which is not limited in the present disclosure.

For example, Embodiment 2 and Embodiment 3 may be implemented in combination, alternatively, Embodiment 1 and Embodiment 3 may be implemented in combination, alternatively, Embodiment 1 and Embodiment 2 may be implemented in combination, alternatively, Embodiment 3 and Embodiment 5 may be implemented in combination.

As an example, the access point device indicates to enable the unequal bandwidth MU-MIMO operating mode in the TB sounding phase, and further indicates not to enable the unequal bandwidth MU-MIMO operating mode in a basic trigger frame within the TXOP corresponding to the TB sounding phase. Then the TB PPDU triggered by the basic trigger frame does not enable the unequal bandwidth MU-MIMO operating mode.

As an example, the access point device indicates to enable the unequal bandwidth MU-MIMO operating mode in the TXOP phase, and further indicates not to enable the unequal bandwidth MU-MIMO operating mode in a basic trigger frame within the TXOP. Then the TB PPDU triggered by the basic trigger frame does not enable the unequal bandwidth MU-MIMO operating mode.

As an example, the access point device indicates to enable the unequal bandwidth MU-MIMO operating mode in the TXOP phase, and further indicates not to enable the unequal bandwidth MU-MIMO operating mode in a MU PPDU within the TXOP. Then the MU PPDU does not enable the unequal bandwidth MU-MIMO operating mode.

In some embodiments, the station device may perform three types of sounding feedback: SU feedback, MU feedback or CQI feedback.

Here, a difference between the SU feedback and the MU feedback is that for the SU feedback, UHR compressed beamforming/CQI report includes a UHR Compressed Beamforming Report field, where the UHR Compressed Beamforming Report field carries an average signal to interference plus noise ratio (SNR) SNR of each spatial stream and a compressed beamforming feedback matrix V; and for the MU feedback, UHR compressed beamforming/CQI report includes a UHR Compressed Beamforming Report field and a UHR MU Exclusive Beamforming Report field, where the UHR Compressed Beamforming Report field carries an average SNR of each spatial stream and a compressed beamforming feedback matrix V, and the UHR MU Exclusive Beamforming Report field carries deviation delta SNR (decibel form) of each column of SNR of each tone V matrix relative to an average SNR of the corresponding spatial stream.

In some embodiments of the present disclosure, the station device may also perform sounding feedback based on its own operating bandwidth.

In other words, it can be considered that in the sounding feedback, the station device also enables the unequal bandwidth MU-MIMO operating mode.

For example, a plurality of station devices perform the MU feedback on a part of the operating bandwidth and perform the SU feedback on another part of the operating bandwidth. The feedback overhead may be reduced compared to all station devices performing the MU feedback. In this case, the station device needs to know the bandwidth size for the SU feedback or the MU feedback.

In some embodiments of the present disclosure, the method 200 further includes:
the access point device transmitting second indication information to the plurality of station devices, where the second indication information is used to indicate one target bandwidth or a plurality of target bandwidths, and the target bandwidth is a bandwidth used for MU feedback or a bandwidth used for SU feedback.

In some embodiments, the second indication information indicates a target bandwidth in candidate bandwidths through bit mapping (bitmap).

For example, the second indication information includes a plurality of bits, each bit corresponds to a sub-channel, and a value of each bit is used to indicate whether the corresponding sub-channel belongs to the target bandwidth.

In some embodiments, a bandwidth granularity corresponding to a sub-channel is determined according to a bandwidth of the BSS network. For example, in a case where the bandwidth of the BSS network is smaller than 320 MHz, one bit corresponds to a 20 MHz sub-channel, and in a case where the bandwidth of the BSS network is greater than or equal to 320 MHz, one sub-channel corresponds to a 40 MHz sub-channel.

In some embodiments, the second indication information is used to indicate a target bandwidth, where the target bandwidth is a bandwidth used by the plurality of station devices to perform the MU feedback.

In this case, after receiving the second indication information, the station device may determine the bandwidth for the MU feedback and/or the SU feedback according to the relationship between the target bandwidth indicated by the second indication information and the operating bandwidth of the station device.

For example, in a case where the target bandwidth is greater than or equal to the operating bandwidth of the station device, and the target bandwidth includes the operating bandwidth of the station device (i.e., the target bandwidth completely covers the operating bandwidth of the station device), the station device performs the MU feedback on the operating bandwidth of the station device.

As another example, in a case where the target bandwidth is smaller than the operating bandwidth of the station device, and the operating bandwidth of the station device includes the target bandwidth (i.e., the target bandwidth does not completely cover the operating bandwidth of the station device), the station device performs the MU feedback on the target bandwidth and performs the SU feedback on a bandwidth other than the target bandwidth in the operating bandwidth of the station device.

For example, in a BSS network, the operating bandwidth of the AP is 160 MHz, and operating bandwidths of the STA 1, the STA 2 and the STA 3 are 40 MHz, 80 MHz and 160 MHz, respectively. As shown in FIG. 13, the STA 1 may perform the MU feedback in the first 40 MHz of the lower 80 MHz; the STA 2 may perform the MU feedback in the lower 80 MHz; and the STA 3 may perform the MU feedback in the lower 80 MHz and perform the SU feedback in the higher 80 MHz. The AP indicates the target bandwidth for the MU feedback through the target bandwidth field in the Special User Info field in the BFRP trigger frame. The target bandwidth field is 8 bits, and the 8 bits correspond to 8 sub-channels in the frequency domain from low to high, where a value of 1 indicates that it belongs to the target bandwidth. If the target bandwidth field indicates 00001111, it means that the target bandwidth for the MU feedback is the lower 80 MH. After receiving the BFRP trigger frame, the STA compares a bandwidth indicated by the target bandwidth field with its own operating bandwidth to determine the bandwidth for performing the MU feedback.

For the STA 1, 80 MHz indicated by the target bandwidth field is greater than the operating bandwidth 40 MHz of the STA 1, and thus the STA 1 performs the MU feedback on the operating bandwidth of the STA 1.

For the STA 2, 80 MHz indicated by the target bandwidth field is equal to the operating bandwidth 80 MHz of the STA 2, and thus the STA 2 performs the MU feedback on the operating bandwidth of the STA 2.

For the STA 3, 80 MHz indicated by the target bandwidth field is smaller than the operating bandwidth 160 MHz of the STA 3, and thus the STA 3 performs the MU feedback on the 80 MHz bandwidth indicated by the target bandwidth field, and performs the SU feedback on a 80 MHz operating bandwidth other than the 80 MHz indicated by the target bandwidth field.

In some embodiments, the second indication information is used to indicate a target bandwidth, where the target bandwidth is a bandwidth used by the plurality of station devices to perform the SU feedback.

In this case, after receiving the second indication information, the station device may determine the bandwidth for the MU feedback and/or the SU feedback according to the relationship between the target bandwidth indicated by the second indication information and the operating bandwidth of the station device.

For example, if the operating bandwidth of the station device includes the target bandwidth (i.e., the operating bandwidth is larger than the target bandwidth), the station device needs to perform the SU feedback and the MU feedback. Specifically, the station device performs the SU feedback on the target bandwidth and performs the MU feedback on a bandwidth other than the target bandwidth in the operating bandwidth of the station device.

As another example, if the operating bandwidth of the station device does not include the target bandwidth, the station device only needs to perform the MU feedback and does not need to perform the SU feedback, and thus the station device performs the MU feedback on the operating bandwidth of the station device.

In some embodiments, the second indication information may be transmitted in the TB sounding phase, for example, via a BFRP frame.

In some embodiments, the second indication information may be carried by an existing field (e.g., a reserved field) in the BFRP frame or a new field added in the BFRP frame. For example, the second indication information may be carried by a reserved field in a special user information field (Special User Info field).

FIG. 14 shows a schematic format diagram of carrying second indication information through a reserved field of a Special User Info field. As shown in FIG. 14, the Special User Info field may include a target bandwidth field, the target bandwidth field may be 8 bits, and the target bandwidth field may indicate the target bandwidth through bit mapping (bitmap). For example, each bit in 8 bits corresponds to a sub-channel, and a value of each sub-channel is used to indicate whether the corresponding sub-channel is a bandwidth for the MU feedback or a bandwidth for the SU feedback. For example, a value of 1 indicates being, and a value of 0 indicates being not. For example, a value of 0 indicates being, and a value of 1 indicates being not.

In some embodiments, the second indication information is used to indicate a plurality of target bandwidths, each of the plurality of target bandwidths corresponds to a station device, and the target bandwidth is a bandwidth used by the corresponding station device to perform the MU feedback.

In the embodiments, the target bandwidth is indicated for each station device, that is, the target bandwidth is for per station device.

In this case, after receiving the second indication information, the station device may determine the bandwidth for the MU feedback and/or the SU feedback according to the relationship between the target bandwidth corresponding to the station device indicated by the second indication information and the operating bandwidth of the station device.

For example, if the target bandwidth is smaller than the operating bandwidth of the station device (i.e., the target bandwidth does not completely cover the operating bandwidth of the station device), the station device needs to perform the MU feedback and the SU feedback. The station device may perform the MU feedback on the target bandwidth and perform the SU feedback on a bandwidth other than the target bandwidth in the operating bandwidth of the station device.

As another example, if the target bandwidth is equal to the operating bandwidth of the station device (i.e., the target bandwidth completely covers the operating bandwidth of the station device), the station device only needs to perform the MU feedback, and the station device performs the MU feedback on the operating bandwidth of the station device.

In some embodiments, the second indication information is used to indicate a plurality of target bandwidths, each of the plurality of target bandwidths corresponds to a station device, and the target bandwidth is a bandwidth used by the corresponding station device to perform the SU feedback.

In the embodiments, the target bandwidth is indicated for each station device, that is, the target bandwidth is for per station device.

In this case, after receiving the second indication information, the station device may determine the bandwidth for the MU feedback and/or the SU feedback according to the relationship between the target bandwidth corresponding to the station device indicated by the second indication information and the operating bandwidth of the station device.

For example, if the operating bandwidth of the station device includes the target bandwidth, the station device needs to perform the MU feedback and the SU feedback, and thus the station device performs the SU feedback on the target bandwidth, and performs the MU feedback on a bandwidth other than the target bandwidth in the operating bandwidth of the station device.

As another example, if the operating bandwidth of the station device does not include the target bandwidth, the station device only needs to perform the MU feedback, and the station device performs the MU feedback on the operating bandwidth of the station device.

In some embodiments, the second indication information is transmitted via a BFRP frame (e.g., a UHR BFRP frame).

For example, the second indication information is carried in a user information field (User Info field) in the BFRP frame.

Optionally, a new field may be added to the User Info field to carry the second indication information.

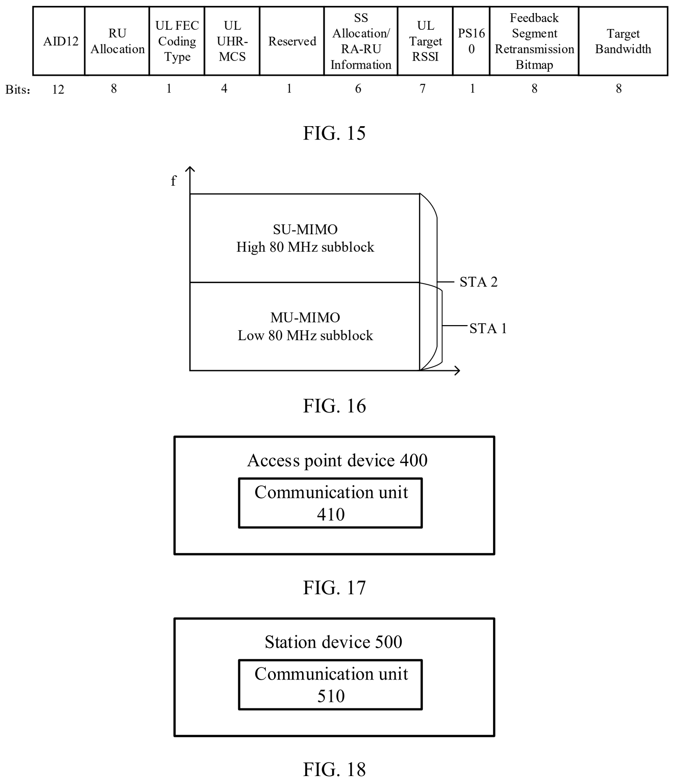

FIG. 15 shows a schematic format diagram of carrying second indication information through a User Info field. As shown in FIG. 15, the User Info field may include a target bandwidth field. The target bandwidth field may be 8 bits, and the target bandwidth field may indicate a target bandwidth through bit mapping (bitmap). For example, each bit in 8 bits corresponds to a sub-channel, and a value of each sub-channel is used to indicate whether the corresponding sub-channel is a bandwidth for the MU feedback or a bandwidth for the SU feedback. For example, a value of 1 indicates being, and a value of 0 indicates being not. For example, a value of 0 indicates being, and a value of 1 indicates being not.

For the example of FIG. 13, the target bandwidth fields in the User Info field corresponding to the AP in the STA 1, the STA 2 and the STA 3 in the BFRP frame indicates 0000 0011, 0000 1111 and 0000 1111, respectively, where a value of 0 indicates a bandwidth for performing the MU feedback. Thus, the STA 1 may perform the MU feedback in the first 40 MHz of the lower 80 MHz; the STA 2 may perform the MU feedback in the lower 80 MHz; and the STA 3 may perform the MU feedback in the lower 80 MHz and perform the SU feedback in the higher 80 MHz.

In some embodiments, the BFRP frame is used to trigger a UHR PPDU, and the plurality of station devices are UHR STAs.

In some embodiments, the BFRP frame may support triggering a plurality of versions of aggregated PPDU, and the plurality of station devices may include a plurality of types of station devices, such as a non-EHT HE STA, a non-UHR EHT STA and a UHR STA.

For example, in a case where the AP requests HE TB PPDU, EHT TB PPDU and UHR TB PPDU to the non-EHT HE STA, the non-UHR EHT STA and the UHR STA respectively at the same time, and an operating bandwidth of the pre-UHR STA (HE and EHT STA) is used as MU-MIMO, the solution of the embodiments of the present disclosure may also be applied to the traditional STA (legacy STA).

In some embodiments of the present disclosure, the method 200 further includes:
the access point device performing MU-MIMO precoding according to the MU feedback of the plurality of station devices; and/or
performing SU-MIMO precoding according to the SU feedback of at least one station device of the plurality of station devices.

For example, before performing an unequal bandwidth MU-MIMO transmission, the access point device may determine a Q_{k,u} matrix according to the sounding feedback of the station device, where Q_{k,u} is a spatial mapping matrix of a user u on a tone k. The matrix has N_{Tx} rows and N_{SS,u} columns, where N_{Tx} is the number of transmit chains, and N_{SS,u} is the number of spatial streams of the user u. The access point device determines a spatial mapping matrix of MU-MIMO using MU feedback of each station device. The access point device determines a spatial mapping matrix of SU-MIMO using SU feedback of at least one station device, and then maps different spatial streams to the transmit chain. In a case where the operating bandwidths of the plurality of station devices are different, at least one station device of the plurality of station devices performs the SU feedback and the MU feedback simultaneously.

For example, an operating bandwidth of the AP is 160 MHz, and operating bandwidths of a STA 1 and a STA 2 are 80 MHz and 160 MHz, respectively. In a case where a DL unequal bandwidth MU-MIMO transmission is performed, the STA 1 and the STA 2 perform MU-MIMO transmission in the lower 80 MHz subblock, and the STA 2 performs SU-MIMO transmission in the higher 80 MHz subblock. As shown in FIG. 16, the AP may perform MU-MIMO precoding according to the MU feedback of the STA 1 and the STA 2 in the lower 80 MHz; and the AP may perform SU-MIMO precoding according to the SU feedback of the STA 2 in the higher 80 MHz. A tone index of the MU feedback of the STA 1 is [-500:Ng:-260] [-252:Ng:-12] [12:Ng:252] [260:Ng:500]. A tone index of the MU feedback of the STA 2 is [-1012:Ng:-772] [-764:Ng:-524] [-500:Ng:-260] [-252:Ng:-12], and a tone index of the SU feedback of the STA 2 is [12:Ng:252] [260:Ng:500] [524:Ng:764] [772:Ng:1012]. Here, [a: Ng: b] represents an arithmetic progression starting with a and b and incrementing by Ng. Optionally, Ng is equal to 4 or 16.

In some embodiments of the present disclosure, the method 200 further includes:
the access point device transmitting third indication information to each of the plurality of station devices, where the third indication information is used to indicate a bandwidth for MU-MIMO transmission by the station device, or the third indication information is used to indicate a bandwidth for SU-MIMO transmission by the station device.

In some embodiments, the third indication information may be used to assist the station device in determining on which tones interference cancellation (IC) is required. For example, on a MU-MIMO bandwidth, the terminal device needs to obtain the interference channel by estimation based on a UHR-LTF sequence and perform the IC, while on an operating bandwidth other than the MU-MIMO bandwidth, SU-MIMO is performed without the IC.

In some embodiments, the third indication information is carried in a resource unit (RU) allocation (RU Allocation) field of a UHR-SIG field in the UHR MU PPDU. That is, the embodiments of the present disclosure may reuse an RU Allocation field of the UHR-SIG field to indicate a bandwidth for MU-MIMO transmission or a bandwidth for SU-MIMO transmission.

For example, a value of the RU allocation field is used to indicate a size of an RU allocated to the station device, and the size of the RU corresponds to a size of a bandwidth used for MU-MIMO or SU-MIMO.

As an example, if a value of the RU Allocation field is 64, it means 242-tone RU, which may correspond to a MU-MIMO bandwidth of 20 MHz; and if a value of the RU Allocation field is 72, it means 484-tone RU, which may correspond to a MU-MIMO bandwidth of 40 MHz. The corresponding RU or MRU. After receiving the UHR MU PPDU, the station device may perform decoding and/or interference cancellation according to the bandwidth indicated by the RU Allocation field of the UHR-SIG field.

For example, if the RU allocation field indicates a bandwidth for MU-MIMO transmission, and the bandwidth is smaller than the operating bandwidth of the station device, it means that MU-MIMO is performed on the bandwidth, and IC is required in a case where the station device decodes MIMO on the bandwidth; and that SU-MIMO is performed on an operating bandwidth other than the bandwidth, and IC is not required in a case where MIMO is decoded on the operating bandwidth other than the bandwidth.

As another example, if the RU allocation field indicates a bandwidth for MU-MIMO transmission, and the bandwidth is the same as the operating bandwidth of the station device, it means that only MU-MIMO is performed on the bandwidth, and SU-MIMO is not performed. In this case, the station device needs to perform IC in a case of decoding MIMO on the bandwidth.

In some embodiments, the access point device may not indicate a bandwidth for MU-MIMO transmission or SU-MIMO transmission, and the station device may perform IC on all tones on the operating bandwidth according to the MU-MIMO decoding manner.

In summary, in the embodiments of the present disclosure, a plurality of station devices may perform MIMO transmission according to their own operating bandwidths, where MU-MIMO transmission may be performed on a bandwidth of the overlapping part, and SU-MIMO transmission may be performed on a bandwidth of the non-overlapping part, that is, the unequal bandwidth MU-MIMO transmission may be performed.

In some implementations, the access point device may indicate a plurality of station devices whether to enable an unequal bandwidth MU-MIMO operating mode. For example, the access point device may perform indication in a TB Sounding phase, a TXOP phase, a TB PPDU transmission phase, a DL MU PPDU transmission phase or a UL Sounding phase.

In some implementations, the access point device may also indicate bandwidths by a plurality of station devices to perform the MU feedback and/or the SU feedback, so that in the plurality of station devices, a station device with a relatively large operating bandwidth may perform the MU feedback on the bandwidth of the overlapping part and perform the SU feedback on the bandwidth of the non-overlapping part, and a station device with a relatively small operating bandwidth may perform the MU feedback only on the operating bandwidth.

The method embodiments of the present disclosure are described in detail above in combination with FIGS. 7 to 16. The device embodiments of the present disclosure are described in detail below in combination with FIGS. 17 to 21. It should be understood that the device embodiments and the method embodiments correspond to each other, and similar descriptions may refer to the method embodiments.

FIG. 17 shows a schematic block diagram of an access point device 400 provided in embodiments of the present disclosure. As shown in FIG. 17, the access point device 400 includes:
a communication unit 410 configured to transmit first indication information to a plurality of station devices, where the first indication information is used to indicate whether to enable a multi-user multiple-input multiple-output (MU-MIMO) operating mode based on operating bandwidths of the plurality of station devices, and in a case where the MU-MIMO operating mode based on the operating bandwidths of the plurality of station devices is enabled, a bandwidth for uplink transmission and/or downlink transmission of each of the plurality of station devices is an operating bandwidth of the station device.

In some embodiments, the first indication information is carried in a media access control (MAC) frame.

In some embodiments, the first indication information is transmitted in a sounding phase based on a trigger frame.

In some embodiments, the first indication information is carried in a Beamforming Report Poll (BFRP) frame.

In some embodiments, the first indication information is transmitted in a Transmission Opportunity (TXOP) phase.

In some embodiments, the first indication information is carried in a Multiple-User Request To Send (MU-RTS) trigger frame.

In some embodiments, the first indication information is transmitted in a physical layer protocol data unit (PPDU) transmission phase based on a trigger frame.

In some embodiments, the first indication information is carried in a basic trigger frame.

In some embodiments, the first indication information is carried in a preamble part of the PPDU.

In some embodiments, the first indication information is transmitted in a downlink MU PPDU transmission phase.

In some embodiments, the first indication information is carried in an MU PPDU for transmission.

In some embodiments, the first indication information is carried in a universal signal (U-SIG) field in the MU PPDU.

In some embodiments, the first indication information is transmitted in an uplink sounding phase.

In some embodiments, the first indication information is carried in a trigger frame, and the trigger frame is used to trigger a plurality of station devices to transmit sounding null data physical layer protocol data unit (NDP) frames.

In some embodiments, the communication unit 410 is further configured to: transmit second indication information to the plurality of station devices, where the second indication information is used to indicate one target bandwidth or a plurality of target bandwidths, and the target bandwidth is a bandwidth used by the plurality of station devices to perform MU feedback, or a bandwidth used by the plurality of station devices to perform SU feedback; and
each target bandwidth of the plurality of target bandwidths corresponds to a station device, and the target bandwidth is a bandwidth used by the corresponding station device to perform the MU feedback, or a bandwidth used by the corresponding station device to perform the SU feedback.

In some embodiments, the second indication information indicates a target bandwidth in candidate bandwidths through bit mapping (bitmap).

In some embodiments, the second indication information includes a plurality of bits, each bit corresponds to a sub-channel, and a value of each bit is used to indicate whether the corresponding sub-channel belongs to the target bandwidth.

In some embodiments, the target bandwidth is a bandwidth used by the plurality of station devices to perform the MU feedback, where
in a case where the target bandwidth is greater than or equal to an operating bandwidth of the station device, and the target bandwidth includes the operating bandwidth of the station device, the station device performs the MU feedback on the operating bandwidth of the station device, or
in a case where the target bandwidth is smaller than an operating bandwidth of the station device, and the operating bandwidth of the station device includes the target bandwidth, the station device performs the MU feedback on the target bandwidth and performs the SU feedback on a bandwidth other than the target bandwidth in the operating bandwidth of the station device.

In some embodiments, the target bandwidth is a bandwidth used by the plurality of station devices to perform the SU feedback, where
in a case where an operating bandwidth of the station device includes the target bandwidth, the station device performs the SU feedback on the target bandwidth and performs the MU feedback on a bandwidth other than the target bandwidth in the operating bandwidth of the station device, or
in a case where the operating bandwidth of the station device does not include the target bandwidth, the station device performs the MU feedback on the operating bandwidth of the station device.

In some embodiments, the second indication information is transmitted in a sounding phase based on a trigger frame.

In some embodiments, the second indication information is transmitted via a BFRP frame.

In some embodiments, the second indication information is carried in a special user field in a BFRP frame.

In some embodiments, the second indication information is used to indicate a plurality of target bandwidths, and the target bandwidth is a bandwidth used by a corresponding station device to perform the MU feedback, where
in a case where the target bandwidth is smaller than an operating bandwidth of the station device, the station device performs the MU feedback on the target bandwidth and performs the SU feedback on a bandwidth other than the target bandwidth in the operating bandwidth of the station device, or
in a case where the target bandwidth is equal to the operating bandwidth of the station device, the station device performs the MU feedback on the operating bandwidth of the station device.

In some embodiments, the second indication information is used to indicate a plurality of target bandwidths, and the target bandwidth is a bandwidth used by a corresponding station device to perform the SU feedback; where
in a case where an operating bandwidth of the station device includes the target bandwidth, the station device performs the SU feedback on the target bandwidth and performs the MU feedback on a bandwidth other than the target bandwidth in the operating bandwidth of the station device, or
in a case where the operating bandwidth of the station device does not include the target bandwidth, the station device performs the MU feedback on the operating bandwidth of the station device.

In some embodiments, the second indication information is transmitted via a BFRP frame.

In some embodiments, the second indication information is carried in a user information field in a BFRP frame.

In some embodiments, the access point device further includes:
a processing unit configured to perform MU-MIMO precoding according to the MU feedback of the plurality of station devices; and/or
performing SU-MIMO precoding according to the SU feedback of at least one station device of the plurality of station devices.

In some embodiments, the communication unit 410 is further configured to: transmit third indication information to each of the plurality of station devices, where the third indication information is used to indicate a bandwidth of the station device for MU-MIMO, or the third indication information is used to indicate a bandwidth of the station device for SU-MIMO.

In some embodiments, the third indication information is carried in a resource unit (RU) allocation field of an ultra-high reliability signal (UHR-SIG) field in the UHR MU PPDU.

In some embodiments, a value of the RU allocation field is used to indicate a size of an RU allocated to the station device, and the size of the RU has a corresponding relationship with a size of a bandwidth used for MU-MIMO or SU-MIMO.

Optionally, in some embodiments, the communication unit may be a communication interface or a transceiver, or an input/output interface of a communication chip or a system on chip. The processing unit mentioned above may be one or more processors.

It should be understood that the access point device 400 according to the embodiments of the present disclosure may correspond to the access point device in the method embodiments of the present disclosure, and the above and other operations and/or functions of each unit in the access point device 400 are respectively for implementing the corresponding processes of the access point device in the method 200 shown in FIGS. 7 to 16, which will not be repeated here for the sake of brevity.

FIG. 18 shows a schematic block diagram of a station device 500 provided in embodiments of the present disclosure. As shown in FIG. 18, the station device 500 includes:
a communication unit 510 configured to receive first indication information transmitted by an access point device, where the first indication information is used to indicate whether to enable a multi-user multiple-input multiple-output (MU-MIMO) operating mode based on operating bandwidths of a plurality of station devices, and in a case where the MU-MIMO operating mode based on the operating bandwidths of the plurality of station devices is enabled, a bandwidth for uplink transmission and/or downlink transmission of each of the plurality of station devices is an operating bandwidth of the station device.

In some embodiments, the first indication information is carried in a media access control (MAC) frame.

In some embodiments, the first indication information is transmitted in a sounding phase based on a trigger frame.

In some embodiments, the first indication information is carried in a Beamforming Report Poll (BFRP) frame.

In some embodiments, the first indication information is transmitted in a Transmission Opportunity (TXOP) phase.

In some embodiments, the first indication information is carried in a Multiple-User Request To Send (MU-RTS) trigger frame.

In some embodiments, the first indication information is transmitted in a Physical Layer Protocol Data Unit (PPDU) transmission phase based on a trigger frame.

In some embodiments, the first indication information is carried in a basic trigger frame.

In some embodiments, the first indication information is carried in a preamble part of the PPDU.

In some embodiments, the first indication information is transmitted in a downlink MU PPDU transmission phase.

In some embodiments, the first indication information is carried in an MU PPDU for transmission.

In some embodiments, the first indication information is carried in a universal signal (U-SIG) field in the MU PPDU.

In some embodiments, the first indication information is transmitted in an uplink sounding phase.

In some embodiments, the first indication information is carried in a trigger frame, and the trigger frame is used to trigger a plurality of station devices to transmit sounding null data physical layer protocol data unit (NDP) frames.

In some embodiments, the communication unit 510 is further configured to: receive second indication information transmitted by the access point device, where the second indication information is used to indicate a target bandwidth, and the target bandwidth is a bandwidth for the plurality of station devices to perform MU feedback, or a bandwidth for the plurality of station devices to perform SU feedback; or
the target bandwidth is a bandwidth used by the station device for MU feedback, or a bandwidth used by the station device for SU feedback.

In some embodiments, the second indication information indicates a target bandwidth in candidate bandwidths through bit mapping (bitmap).

In some embodiments, the second indication information includes a plurality of bits, each bit corresponds to a sub-channel, and a value of each bit is used to indicate whether the corresponding sub-channel belongs to the target bandwidth.

In some embodiments, the target bandwidth is a bandwidth used by the plurality of station devices to perform the MU feedback, and the method further includes:
in a case where the target bandwidth is greater than or equal to an operating bandwidth of the station device and the target bandwidth includes the operating bandwidth of the station device, the station device performing the MU feedback on the operating bandwidth of the station device, or
in a case where the target bandwidth is smaller than the operating bandwidth of the station device and the operating bandwidth of the station device includes the target bandwidth, the station device performing the MU feedback on the target bandwidth and performing the SU feedback on a bandwidth other than the target bandwidth in the operating bandwidth of the station device.

In some embodiments, the target bandwidth is a bandwidth used by the plurality of station devices to perform the SU feedback, and the method further includes:
in a case where an operating bandwidth of the station device includes the target bandwidth, the station device performing the SU feedback on the target bandwidth and performing the MU feedback on a bandwidth other than the target bandwidth in the operating bandwidth of the station device, or
in a case where the operating bandwidth of the station device does not include the target bandwidth, the station device performing the MU feedback on the operating bandwidth of the station device.

In some embodiments, the second indication information is transmitted in a sounding phase based on a trigger frame.

In some embodiments, the second indication information is transmitted via a BFRP frame.

In some embodiments, the second indication information is carried in a special user field in a BFRP frame.

In some embodiments, the target bandwidth is a bandwidth used by the station device for MU feedback, and the method further includes:
in a case where the target bandwidth is smaller than an operating bandwidth of the station device, the station device performing the MU feedback on the target bandwidth and performing the SU feedback on a bandwidth other than the target bandwidth in the operating bandwidth of the station device, or
in a case where the target bandwidth is equal to the operating bandwidth of the station device, the station device performing the MU feedback on the operating bandwidth of the station device.

In some embodiments, the target bandwidth is a bandwidth used by the station device for SU feedback, and the communication unit 510 is further configured to:
in a case where an operating bandwidth of the station device includes the target bandwidth, perform the SU feedback on the target bandwidth, and perform the MU feedback on a bandwidth other than the target bandwidth in the operating bandwidth of the station device, or
in a case where the operating bandwidth of the station device does not include the target bandwidth, perform the MU feedback on the operating bandwidth of the station device.

In some embodiments, the second indication information is transmitted via a BFRP frame.

In some embodiments, the second indication information is carried in a user information field in a BFRP frame.

In some embodiments, the communication unit 510 is further configured to: receive third indication information transmitted by the access point device, where the third indication information is used to indicate a bandwidth of the station device for MU-MIMO, or the third indication information is used to indicate a bandwidth of the station device for SU-MIMO.

In some embodiments, the third indication information is carried in a resource unit (RU) allocation field of an ultra-high reliability signal (UHR-SIG) field in the UHR MU PPDU.

In some embodiments, a value of the RU allocation field is used to indicate a size of an RU allocated to the station device, and the size of the RU has a corresponding relationship with a size of a bandwidth used for MU-MIMO or SU-MIMO.

In some embodiments, the station device further includes:
a processing unit configured to, in a case where the third indication information is used to indicate a bandwidth of the station device for MU-MIMO, and the bandwidth is smaller than an operating bandwidth of the station device, perform interference cancellation when decoding MIMO on the bandwidth, and not perform interference cancellation on a bandwidth other than the bandwidth in the operating bandwidth of the station device; or
in a case where the third indication information is used to indicate a bandwidth of the station device for MU-MIMO, and the bandwidth is equal to the operating bandwidth of the station device, perform interference cancellation when decoding MIMO on the bandwidth.

Optionally, in some embodiments, the communication unit may be a communication interface or a transceiver, or an input/output interface of a communication chip or a system on chip. The processing unit mentioned above may be one or more processors.

It should be understood that the station device 500 according to the embodiments of the present disclosure may correspond to the station device in the method embodiments of the present disclosure, and the above-mentioned and other operations and/or functions of each unit in the station device 500 are respectively for implementing the corresponding processes of the station device in the method 200 shown in FIGS. 7 to 16, which will not be repeated here for the sake of brevity.

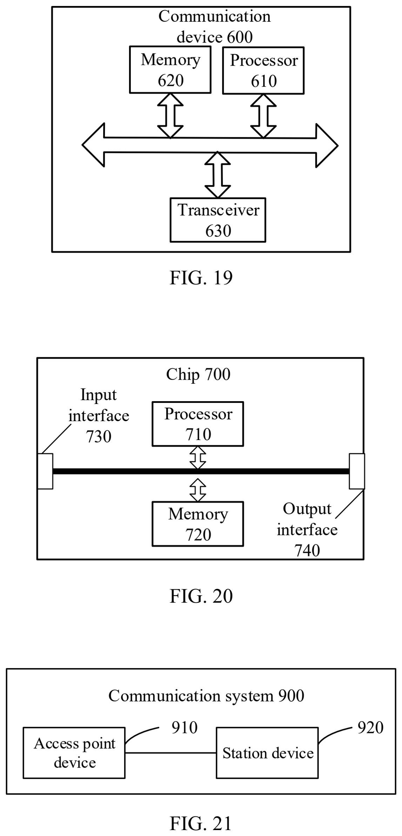

FIG. 19 is a schematic structural diagram of a communication device 600 provided in embodiments of the present disclosure. The communication device 600 shown in FIG. 6 includes a processor 610, and the processor 610 may call a computer program from a memory and run the computer program to implement the method in the embodiments of the present disclosure.

Optionally, as shown in FIG. 6, the communication device 600 may further include a memory 620. The processor 610 may call a computer program from the memory 620 and run the computer program to implement the method in the embodiments of the present disclosure.

The memory 620 may be a separate device independent of the processor 610, or may be integrated into the processor 610.

Optionally, as shown in FIG. 19, the communication device 600 may further include a transceiver 630, and the processor 610 may control the transceiver 630 to communicate with other devices, specifically, may transmit information or data to other devices or receive information or data transmitted by other devices.

Here, the transceiver 630 may include a transmitter and a receiver. The transceiver 630 may further include an antenna, and the number of the antenna(s) may be one or more.

Optionally, the communication device 600 may specifically be an access point device in the embodiments of the present disclosure, and the communication device 600 may implement corresponding processes implemented by the access point device in various methods of the embodiments of the present disclosure, which will not be described in detail here for the sake of brevity.

Optionally, the communication device 600 may specifically be a station device in the embodiments of the present disclosure, and the communication device 600 may implement corresponding processes implemented by the station device in various methods of the embodiments of the present disclosure, which will not be described in detail here for the sake of brevity.

FIG. 20 is a schematic structural diagram of a chip provided in embodiments of the present disclosure. The chip 700 shown in FIG. 20 includes a processor 710, and the processor 710 may call a computer program from a memory and run the computer program to implement the method in the embodiments of the present disclosure.

Optionally, as shown in FIG. 7, the chip 700 may further include a memory 720. The processor 710 may call a computer program from the memory 720 and run the computer program to implement the method in the embodiments of the present disclosure.

The memory 720 may be a separate device independent of the processor 710, or may be integrated into the processor 710.

Optionally, the chip 700 may further include an input interface 730. The processor 710 may control the input interface 730 to communicate with other devices or chips, and specifically, may obtain information or data transmitted by other devices or chips.

Optionally, the chip 700 may further include an output interface 740. The processor 710 may control the output interface 740 to communicate with other devices or chips, and specifically, may output information or data to other devices or chips.

Optionally, the chip may be applied to an access point device in the embodiments of the present disclosure, and the chip may implement corresponding processes implemented by the access point device in various methods of the embodiments of the present disclosure, which will not be described in detail here for the sake of brevity.

Optionally, the chip may be applied to the station device in the embodiments of the present disclosure, and the chip may implement corresponding processes implemented by the station device in various methods of the embodiments of the present disclosure, which will not be described in detail here for the sake of brevity.

It should be understood that the chip mentioned in the embodiments of the present disclosure may also be referred to as a system-level chip, a system chip, a chip system, a system-on-chip chip, or the like.

FIG. 21 is a schematic block diagram of a communication system 900 provided in embodiments of the present disclosure. As shown in FIG. 21, the communication system 900 includes an access point device 910 and a station device 920.

The access point device 910 may be configured to implement the corresponding functions implemented by the access point device in the above methods, and the station device 920 may be configured to implement the corresponding functions implemented by the station device in the above methods, which will not be described in detail here for the sake of brevity.

It should be understood that the processor in the embodiments of the present disclosure may be an integrated circuit chip with signal processing capabilities. In the implementation process, each step of the above method embodiments may be completed by an integrated logic circuit of hardware in a processor or an instruction in software form. The above-mentioned processor may be a general-purpose processor, a digital signal processor (DSP), an application specific integrated circuit (ASIC), a field programmable gate array (FPGA) or other programmable logic devices, discrete gate or transistor logic devices, or discrete hardware components. The various methods, steps and logic diagrams disclosed in the embodiments of the present disclosure may be implemented or performed. A general purpose processor may be a microprocessor, or the processor may be any conventional processor. The steps of the method disclosed in the embodiments of the present disclosure may be directly implemented as being perform by a hardware decoding processor, or may be implemented by a combination of hardware and software modules in the decoding processor. The software module may be located in a random access memory, a flash memory, a read-only memory, a programmable read-only memory, or an electrically erasable programmable memory, a register, or other mature storage media in the art. The storage medium is located in the memory, and the processor reads the information in the memory and completes the steps of the above method in combination with its hardware.

It can be understood that the memory in the embodiments of the present disclosure may be a volatile (transitory) memory or a non-volatile (non-transitory) memory, or may include both volatile and non-volatile memories. The non-volatile memory may be a read-only memory (ROM), a programmable ROM (PROM), an erasable programmable ROM (erasable PROM, EPROM), an electrically erasable programmable read-only memory (electrically EPROM, EEPROM) or a flash memory. The volatile memory may be a random access memory (RAM), which acts as external cache. By way of example and not limitation, many forms of RAMs are available, such as a static random access memory (static RAM, SRAM), a dynamic random access memory (dynamic RAM, (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), and a direct memory bus random access memory (direct rambus RAM, DR RAM). It should be noted that the memory in the system and method described herein is intended to include, but is not limited to, these and any other suitable types of memories.

It should be understood that the above memory is exemplary but not restrictive. For example, the memory in the embodiments of the present disclosure may also be a static random access memory (static RAM, SRAM), a dynamic random access memory (dynamic RAM, (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct memory bus random access memory (direct rambus RAM, DR RAM), or the like. That is, the memory in the embodiments of the present disclosure is intended to include but is not limited to these and any other suitable types of memories.

The embodiments of the present disclosure further provide a computer-readable storage medium for storing a computer program.

Optionally, the computer-readable storage medium may be applied to the access point device in the embodiments of the present disclosure, and the computer program enables a computer to perform the corresponding processes implemented by the access point device in the various methods of the embodiments of the present disclosure, which will not be described in detail here for the sake of brevity.

Optionally, the computer-readable storage medium may be applied to the station device in the embodiments of the present disclosure, and the computer program enables a computer to perform the corresponding processes implemented by the station device in the various methods of the embodiments of the present disclosure, which will not be described in detail here for the sake of brevity.

The embodiments of the present disclosure further provide a computer program product, including computer program instructions.

Optionally, the computer program product may be applied to the access point device in the embodiments of the present disclosure, and the computer program instructions enable a computer to perform the corresponding processes implemented by the access point device in the various methods of the embodiments of the present disclosure, which will not be described in detail here for the sake of brevity.

Optionally, the computer program product may be applied to the station device in the embodiments of the present disclosure, and the computer program instructions enable a computer to perform the corresponding processes implemented by the station device in the various methods of the embodiments of the present disclosure, which will not be described in detail here for the sake of brevity.

The embodiments of the present disclosure further provide a computer program.

Optionally, the computer program may be applied to the access point device in the embodiments of the present disclosure. When run on a computer, the computer program enables the computer to perform the corresponding processes implemented by the access point device in the various methods of the embodiments of the present disclosure, which will not be described in detail here for the sake of brevity.

Optionally, the computer program may be applied to the station device in the embodiments of the present disclosure. When t run on a computer, the computer program enables the computer to perform the corresponding processes implemented by the station device in the various methods of the embodiments of the present disclosure, which will not be described in detail here for the sake of brevity.

Those ordinary skilled in the art may recognize that units and algorithm steps of each example described in conjunction with the embodiments disclosed herein can be implemented by electronic hardware, or a combination of computer software and electronic hardware. Whether these functions are performed in hardware or software depends on the specific application and design constraints of the technical solution. A skilled person may use different methods to implement the described functions for each specific application, but such implementation should not be considered beyond the scope of the present disclosure.

Those skilled in the art may clearly understand that, for convenience and brevity of description, the specific working processes of the systems, the devices and the units as described above can refer to the corresponding processes in the aforementioned method embodiments and will not be repeated here.

In several embodiments provided in the present disclosure, it should be understood that the disclosed systems, devices and methods may be implemented in other ways. For example, the device embodiments described above are merely schematic. For example, the division of the units is merely a logical function division and there may be other division methods in actual implementations. For example, a plurality of units or components may be combined or integrated into another system, or some features may be ignored or not performed. In addition, coupling or direct coupling or communication connection between each other shown or discussed may be indirect coupling or communication connection through some interfaces, devices or units, which may be in electrical, mechanical or other forms.

The units described as separate components may be or may not be physically separated, and the components shown as units may be or may not be physical units. That is, they may be located in one place or distributed over a plurality of network units. Some or all of the units may be selected depending on actual needs to achieve the purpose of the solutions of the embodiments.

In addition, each function unit in various embodiments of the present disclosure may be integrated into a processing unit, or each unit may exist physically separately, or two or more units may be integrated into one unit.

If the functions are implemented in a form of software function units and sold or used as independent products, the functions may be stored in a computer-readable storage medium. Based on this understanding, for the technical solution of the present disclosure an essential of the technical solution, or a part that contributes to the prior art, or a part of the technical solution may be embodied in a form of a software product. The computer software product is stored in a storage medium and includes several instructions for enabling a computer device (which may be a personal computer, a server or a network device) to perform all or part of the steps of the method described in various embodiments of the present disclosure. The aforementioned storage media include: U disk, mobile hard disk, read-only memory (ROM), random access memory (RAM), a magnetic disk or optical disk, and other media that may store program codes.

The above descriptions are only specific implementations of the present disclosure, but the protection scope of the present disclosure is not limited thereto. Changes or replacements that any person skilled in the art could readily conceive of within the technical scope of the present disclosure shall be included in the protection scope of the present disclosure. Therefore, the protection scope of the present disclosure shall be subject to the protection scope of the claims.

## Claims

1. A wireless communication method, comprising:
transmitting, by an access point device, first indication information to a plurality of station devices, the first indication information being used to indicate whether to enable a multi-user multiple-input multiple-output (MU-MIMO) operating mode based on operating bandwidths of the plurality of station devices, wherein in a case where the MU-MIMO operating mode based on the operating bandwidths of the plurality of station devices is enabled, a bandwidth for uplink transmission and/or downlink transmission of each station device in the plurality of station devices is an operating bandwidth of the station device.

2. The method according to claim 1, wherein the first indication information is carried in a media access control (MAC) frame.

3. The method according to claim 1 or 2, wherein the first indication information is transmitted in a sounding phase based on a trigger frame.

4. The method according to claim 3, wherein the first indication information is carried in a beamforming report poll (BFRP) frame.

5. The method according to claim 1 or 2, wherein the first indication information is transmitted in a transmission opportunity (TXOP) phase.

6. The method according to claim 5, wherein the first indication information is carried in a multi-user request to send (MU-RTS) trigger frame.

7. The method according to claim 1 or 2, wherein the first indication information is transmitted in a physical layer protocol data unit (PPDU) transmission phase based on a trigger frame.

8. The method according to claim 7, wherein the first indication information is carried in a basic trigger frame.

9. The method according to claim 1, wherein the first indication information is carried in a preamble part of a PPDU.

10. The method according to claim 1 or 9, wherein the first indication information is transmitted in a downlink multi-user physical layer protocol data unit (MU PPDU) transmission phase.

11. The method according to claim 10, wherein the first indication information is carried in the MU PPDU for transmission.

12. The method according to claim 11, wherein the first indication information is carried in a universal signal (U-SIG) field in the MU PPDU.

13. The method according to claim 1 or 2, wherein the first indication information is transmitted in an uplink sounding phase.

14. The method according to claim 13, wherein the first indication information is carried in a trigger frame, and the trigger frame is used to trigger the plurality of station devices to transmit sounding null data physical layer protocol data unit (NDP) frames.

15. The method according to any one of claims 1 to 14, further comprising:
transmitting, by the access point device, second indication information to the plurality of station devices, the second indication information being used to indicate one target bandwidth or a plurality of target bandwidths, wherein the one target bandwidth is a bandwidth used by the plurality of station devices to perform MU feedback, or a bandwidth used by the plurality of station devices to perform SU feedback; and
each target bandwidth of the plurality of target bandwidths corresponds to a station device, and the target bandwidth is a bandwidth used by the corresponding station device to perform MU feedback, or a bandwidth used by the corresponding station device to perform SU feedback.

16. The method according to claim 15, wherein the second indication information indicates a target bandwidth in candidate bandwidths through bit mapping.

17. The method according to claim 15, wherein the second indication information includes a plurality of bits, each bit corresponds to a sub-channel, and a value of each bit is used to indicate whether the corresponding sub-channel belongs to a target bandwidth.

18. The method according to any one of claims 15 to 17, wherein a target bandwidth is a bandwidth used by the plurality of station devices to perform the MU feedback, wherein
in a case where the target bandwidth is greater than or equal to the operating bandwidth of the station device and the target bandwidth includes the operating bandwidth of the station device, the station device performs the MU feedback on the operating bandwidth of the station device, or
in a case where the target bandwidth is smaller than the operating bandwidth of the station device and the operating bandwidth of the station device includes the target bandwidth, the station device performs the MU feedback on the target bandwidth, and performs the SU feedback on a bandwidth other than the target bandwidth in the operating bandwidth of the station device.

19. The method according to any one of claims 15 to 17, wherein a target bandwidth is a bandwidth used by the plurality of station devices to perform the SU feedback, wherein
in a case where the operating bandwidth of the station device includes the target bandwidth, the station device performs the SU feedback on the target bandwidth, and performs the MU feedback on a bandwidth other than the target bandwidth in the operating bandwidth of the station device, or
in a case where the operating bandwidth of the station device does not include the target bandwidth, the station device performs the MU feedback on the operating bandwidth of the station device.

20. The method according to any one of claims 15 to 19, wherein the second indication information is transmitted in a sounding phase based on a trigger frame.

21. The method according to claim 20, wherein the second indication information is transmitted via a BFRP frame.

22. The method according to claim 21, wherein the second indication information is carried in a special user field in the BFRP frame.

23. The method according to any one of claims 15 to 17, wherein the second indication information is used to indicate the plurality of target bandwidths, and the target bandwidths are each a bandwidth used by the corresponding station device to perform the MU feedback, wherein
in a case where the target bandwidth is smaller than the operating bandwidth of the station device, the station device performs the MU feedback on the target bandwidth and performs the SU feedback on a bandwidth other than the target bandwidth in the operating bandwidth of the station device, or
in a case where the target bandwidth is equal to the operating bandwidth of the station device, the station device performs the MU feedback on the operating bandwidth of the station device.

24. The method according to any one of claims 15 to 17, wherein the second indication information is used to indicate the plurality of target bandwidths, and the target bandwidths are each a bandwidth used by the corresponding station device to perform the SU feedback, wherein
in a case where the operating bandwidth of the station device includes the target bandwidth, the station device performs the SU feedback on the target bandwidth, and performs the MU feedback on a bandwidth other than the target bandwidth in the operating bandwidth of the station device, or
in a case where the operating bandwidth of the station device does not include the target bandwidth, the station device performs the MU feedback on the operating bandwidth of the station device.

25. The method according to claim 23 or 24, wherein the second indication information is transmitted via a BFRP frame.

26. The method according to claim 25, wherein the second indication information is carried in a user information field in the BFRP frame.

27. The method according to any one of claims 1 to 26, further comprising:
performing, by the access point device, MU-MIMO precoding according to MU feedback of the plurality of station devices; and/or
performing, by the access point device, SU-MIMO precoding according to SU feedback of at least one station device of the plurality of station devices.

28. The method according to any one of claims 1 to 27, further comprising:
transmitting, by the access point device, third indication information to each station device in the plurality of station devices, wherein the third indication information is used to indicate a bandwidth of the station device for MU-MIMO, or the third indication information is used to indicate a bandwidth of the station device for SU-MIMO.

29. The method according to claim 28, wherein the third indication information is carried in a resource unit (RU) allocation field of an ultra-high reliability signal (UHR-SIG) field in a UHR MU PPDU.

30. The method according to claim 29, wherein a value of the RU allocation field is used to indicate a size of an RU allocated to the station device, and the size of the RU has a corresponding relationship with a size of a bandwidth used for the MU-MIMO or the SU-MIMO.

31. A wireless communication method, comprising:
receiving, by a station device, first indication information transmitted by an access point device, the first indication information being used to indicate whether to enable a multi-user multiple-input multiple-output (MU-MIMO) operating mode based on operating bandwidths of a plurality of station devices, wherein in a case where the MU-MIMO operating mode based on the operating bandwidths of the plurality of station devices is enabled, a bandwidth for uplink transmission and/or downlink transmission of each station device in the plurality of station devices is an operating bandwidth of the station device.

32. The method according to claim 31, wherein the first indication information is carried in a media access control (MAC) frame.

33. The method according to claim 31 or 32, wherein the first indication information is transmitted in a sounding phase based on a trigger frame.

34. The method according to claim 33, wherein the first indication information is carried in a beamforming report poll (BFRP) frame.

35. The method according to claim 31 or 32, wherein the first indication information is transmitted in a transmission opportunity (TXOP) phase.

36. The method according to claim 35, wherein the first indication information is carried in a multi-user request to send (MU-RTS) trigger frame.

37. The method according to claim 31 or 32, wherein the first indication information is transmitted in a physical layer protocol data unit (PPDU) transmission phase based on a trigger frame.

38. The method according to claim 37, wherein the first indication information is carried in a basic trigger frame.

39. The method according to claim 31, wherein the first indication information is carried in a preamble part of a PPDU.

40. The method according to claim 31 or 39, wherein the first indication information is transmitted in a downlink multi-user physical layer protocol data unit (MU PPDU) transmission phase.

41. The method according to claim 40, wherein the first indication information is_carried in the MU PPDU for transmission.

42. The method according to claim 41, wherein the first indication information is carried in a universal signal (U-SIG) field in the MU PPDU.

43. The method according to claim 31 or 32, wherein the first indication information is transmitted in an uplink sounding phase.

44. The method according to claim 43, wherein the first indication information is carried in a trigger frame, and the trigger frame is used to trigger the plurality of station devices to transmit sounding null data physical layer protocol data unit (NDP) frames.

45. The method according to any one of claims 31 to 44, further comprising:
receiving, by the station device, second indication information transmitted by the access point device, the second indication information being used to indicate a target bandwidth, wherein the target bandwidth is a bandwidth used by the plurality of station devices to perform MU feedback, or a bandwidth used by the plurality of station devices to perform SU feedback; or
the target bandwidth is a bandwidth used by the station device to perform MU feedback, or a bandwidth used by the station device to perform SU feedback.

46. The method according to claim 45, wherein the second indication information indicates the target bandwidth in candidate bandwidths through bit mapping.

47. The method according to claim 45, wherein the second indication information includes a plurality of bits, each bit corresponds to a sub-channel, and a value of each bit is used to indicate whether the corresponding sub-channel belongs to the target bandwidth.

48. The method according to any one of claims 45 to 47, wherein the target bandwidth is a bandwidth used by the plurality of station devices to perform the MU feedback, and the method further comprises:
in a case where the target bandwidth is greater than or equal to the operating bandwidth of the station device and the target bandwidth includes the operating bandwidth of the station device, the station device performs the MU feedback on the operating bandwidth of the station device, or
in a case where the target bandwidth is smaller than the operating bandwidth of the station device and the operating bandwidth of the station device includes the target bandwidth, the station device performs the MU feedback on the target bandwidth and performs the SU feedback on a bandwidth other than the target bandwidth in the operating bandwidth of the station device.

49. The method according to any one of claims 45 to 47, wherein the target bandwidth is a bandwidth used by the plurality of station devices to perform the SU feedback, and the method further comprises:
in a case where the operating bandwidth of the station device includes the target bandwidth, the station device performs the SU feedback on the target bandwidth, and performs the MU feedback on a bandwidth other than the target bandwidth in the operating bandwidth of the station device, or
in a case where the operating bandwidth of the station device does not include the target bandwidth, the station device performs the MU feedback on the operating bandwidth of the station device.

50. The method according to any one of claims 45 to 49, wherein the second indication information is transmitted in a sounding phase based on a trigger frame.

51. The method according to claim 50, wherein the second indication information is transmitted via a BFRP frame.

52. The method according to claim 51, wherein the second indication information is carried in a special user field in the BFRP frame.

53. The method according to any one of claims 45 to 47, wherein the target bandwidth is the bandwidth used by the station device to perform the MU feedback, and the method further comprises:
in a case where the target bandwidth is smaller than the operating bandwidth of the station device, the station device performs the MU feedback on the target bandwidth and performs the SU feedback on a bandwidth other than the target bandwidth in the operating bandwidth of the station device, or
in a case where the target bandwidth is equal to the operating bandwidth of the station device, the station device performs the MU feedback on the operating bandwidth of the station device.

54. The method according to any one of claims 45 to 47, wherein the target bandwidth is the bandwidth used by the station device to perform the SU feedback, and the method further comprises:
in a case where the operating bandwidth of the station device includes the target bandwidth, the station device performs the SU feedback on the target bandwidth, and performs the MU feedback on a bandwidth other than the target bandwidth in the operating bandwidth of the station device, or
in a case where the operating bandwidth of the station device does not include the target bandwidth, the station device performs the MU feedback on the operating bandwidth of the station device.

55. The method according to claim 53 or 54, wherein the second indication information is transmitted via a BFRP frame.

56. The method according to claim 55, wherein the second indication information is carried in a user information field in the BFRP frame.

57. The method according to any one of claims 31 to 56, further comprising:
receiving, by the station device, third indication information transmitted by the access point device, wherein the third indication information is used to indicate a bandwidth of the station device for MU-MIMO, or the third indication information is used to indicate a bandwidth of the station device for SU-MIMO.

58. The method according to claim 57, wherein the third indication information is carried in a resource unit (RU) allocation field of an ultra-high reliability signal (UHR-SIG) field in a UHR MU PPDU.

59. The method according to claim 58, wherein a value of the RU allocation field is used to indicate a size of an RU allocated to the station device, and the size of the RU has a corresponding relationship with a size of a bandwidth used for the MU-MIMO or the SU-MIMO.

60. The method according to any one of claims 57 to 59, further comprising:
if the third indication information is used to indicate the bandwidth of the station device for the MU-MIMO, and the bandwidth is smaller than the operating bandwidth of the station device, performing, by the station device, interference cancellation when decoding MIMO on the bandwidth, and not performing, by the station device, interference cancellation on a bandwidth other than the bandwidth in the operating bandwidth of the station device; or
if the third indication information is used to indicate the bandwidth of the station device for the MU-MIMO, and the bandwidth is equal to the operating bandwidth of the station device, performing, by the station device, interference cancellation when decoding MIMO on the bandwidth.

61. An access point device, comprising:
a communication unit, configured to transmit first indication information to a plurality of station devices, the first indication information being used to indicate whether to enable a multi-user multiple-input multiple-output (MU-MIMO) operating mode based on operating bandwidths of the plurality of station devices, wherein in a case where the MU-MIMO operating mode based on the operating bandwidths of the plurality of station devices is enabled, a bandwidth for uplink transmission and/or downlink transmission of each station device in the plurality of station devices is an operating bandwidth of the station device.

62. A station device, comprising:
a communication unit, configured to receive first indication information transmitted by an access point device, the first indication information being used to indicate whether to enable a multi-user multiple-input multiple-output (MU-MIMO) operating mode based on operating bandwidths of a plurality of station devices, wherein in a case where the MU-MIMO operating mode based on the operating bandwidths of the plurality of station devices is enabled, a bandwidth for uplink transmission and/or downlink transmission of each station device in the plurality of station devices is an operating bandwidth of the station device.

63. An access point device, comprising: a processor and a memory, wherein the memory is configured to store a computer program, and the processor is configured to call the computer program stored in the memory and run the computer program to perform the method according to any one of claims 1 to 30.

64. A station device, comprising: a processor and a memory, wherein the memory is configured to store a computer program, and the processor is used to call the computer program stored in the memory and run the computer program to perform the method according to any one of claims 31 to 60.

65. A chip, comprising: a processor configured to call a computer program from a memory and run the computer program to enable a device equipped with the chip to perform the method according to any one of claims 1 to 30, or the method according to any one of claims 31 to 60.

66. A computer-readable storage medium, configured to store a computer program, wherein the computer program enables a computer to perform the method according to any one of claims 1 to 30, or the method according to any one of claims 31 to 60.

67. A computer program product, comprising computer program instructions, wherein the computer program instructions enable a computer to perform the method according to any one of claims 1 to 30, or the method according to any one of claims 31 to 60.

68. A computer program, wherein the computer program enables a computer to perform the method according to any one of claims 1 to 30, or the method according to any one of claims 31 to 60.
